# EUROPÄISCHE PATENTSCHRIFT

(11) **EP 1 736 279 B1**
(45) Veröffentlichungstag und Bekanntmachung des Hinweises auf die Patenterteilung: **01.09.2010**
(21) Anmeldenummer: 06015535.5
(22) Anmeldetag: 24.10.2003
(51) Int. Cl.: B24B 13/00, B24B 41/00

(54) **Verfahren und Vorrichtung zum Herstellen von optischen Gläsern**
Method and device for producing optical glasses
Procédé et dispositif de production de verres optiques

(30) Priorität: 25.10.2002 DE 10250856
(43) Veröffentlichungstag der Anmeldung: 27.12.2006
(62) Teilanmeldung aus: 03809324.1
(73) Patentinhaber: Carl Zeiss Vision GmbH, 73430 Aalen (DE)
(72) Erfinder: Kübler, Christoph, 73447 Oberkochen (DE); Köhle, Thomas, 73432 Aalen-Ebnat (DE); Kaaz, Manfred, 73447 Oberkochen (DE); Bess, Christian, 73432 Aalen-Ebnat (DE)
(74) Vertreter: Witte, Weller & Partner

(56) Entgegenhaltungen:
- DE-A1- 3 418 329
- US-A- 4 765 669
- US-A- 5 161 846
- US-A- 5 775 755
- US-A- 6 015 174

## Beschreibung

Die Erfindung betrifft ein Verfahren zum Herstellen von Brillengläsern, bei dem ein Roboter die Brillengläser mittels eines Greifers hält, der die Brillengläser ausschließlich an deren Umfang ergreift.

Die Erfindung betrifft ferner eine Vorrichtung zum Herstellen von Brillengläsern, mit einem Roboter, der die Brillengläser an deren Umfang ergreift.

Ein Verfahren und eine Vorrichtung der vorstehend genannten Art sind aus der DE 34 18 329 A1 bekannt.

Die Erfindung wird nachstehend an Hand einer Anwendung bei Brillengläsern beschrieben. Es versteht sich jedoch, dass die Erfindung auch bei anderen optischen Gläsern eingesetzt werden kann.

Aus der WO 02/00392 A1 ist eine Vorrichtung zum Laden und Entladen optischer Werkstücke bekannt. Die bekannte Vorrichtung wird vorzugsweise im Zusammenhang mit einer Schleifmaschine für optische Einzellinsen eingesetzt. Bei der bekannten Vorrichtung werden die Brillengläser mittels eines Saugkopfes gehandhabt, der auf der optischen Oberfläche der Brillengläser aufsetzt. Zwar wird auch vorgeschlagen, einen pneumatisch betriebenen Drei-Finger-Greifer einzusetzen, dieser soll jedoch lediglich zum Zentrieren der Brillengläser verwendet werden.

Aus der eingangs genannten DE 34 18 329 A1 ist eine Brillenglasrandschleifmaschine bekannt. Die Maschine weist einen Greifer zur Entnahme von Brillenglasrohlingen aus einem Magazin, bzw. der fertig bearbeiteten Brillengläser aus einer Bearbeitungsposition auf. Der Greifer ist mit zwei Greiffingern versehen, die zueinander parallel ausgerichtet sind. Die Greiffinger sind an ihrem einen Ende an dem Greifer schwenkbar gelagert und jeweils mittels eines pneumatischen Zylinders um den Schwenkpunkt verschwenkbar. Zum Ergreifen eines Brillenglasrohlings bewegen sich die Greiffinger unabhängig voneinander bis zur Anlage am Brillenglasrand vor. Damit wird das Brillenglas an zwei einander diametral gegenüberliegenden Punkten am Rand ergriffen.

Diese Maßnahme hat zwar den Vorteil, dass die empfindliche optische Oberfläche der Gläser im Gegensatz zum Stand der Technik nicht ergriffen wird, so dass jedwede Beeinträchtigung dieser empfindlichen optischen Oberflächen unmöglich gemacht wird, andererseits ist die Anlage an zwei Punkten labil.

Die DE 41 27 094 A1 offenbart eine Brillenglasschleifmaschine mit einem Handhabungsgerät, das die Brillenglasrohlinge am Rand ergreift. Das Handhabungsgerät ist mit einem Greifarm versehen, der ebenfalls zwei Finger hat, die jedoch um eine gemeinsame Achse schwenkbar sind und daher nicht parallel am Rand des Brillenglasrohlings anliegen.

Der Erfindung liegt die Aufgabe zugrunde, ein Verfahren und eine Vorrichtung der eingangs genannten Art dahingehend weiterzubilden, dass die vorstehend genannten Probleme vermieden werden.

Insbesondere soll es möglich werden, die Brillengläser stabil zu halten und dabei ggf. auch zu zentrieren.

Bei einem Verfahren der eingangs genannten Art wird diese Aufgabe erfindungsgemäß dadurch gelöst, dass die Brillengläser nach dem Polieren einer Oberfläche der Brillengläser mit Fingern des Roboters an drei oder mehr Punkten ihres Umfanges mit einer geregelten Kraft ergriffen werden, wobei die Finger an ihrem Umfang mit einer weichen Ummantelung versehen sind und beim Ergreifen der Brillengläser im Wesentlichen senkrecht zur Oberfläche gerichtet werden.

Bei einer Vorrichtung der eingangs genannten Art wird diese Aufgabe erfindungsgemäß dadurch gelöst, dass der Roboter einen Greifer mit drei oder mehr Fingern aufweist, die nach dem Polieren einer Oberfläche der Brillengläser senkrecht zu der Oberfläche gerichtet an den Umfang anlegbar sind, wobei der Greifer die Brillengläser mit einer vorgegebenen Kraft ergreift, wobei ein Regler für die Kraft vorgesehen ist, und wobei die Finger an ihrem Umfang mit einer weichen Ummantelung versehen sind.

Die der Erfindung zugrunde liegende Aufgabe wird auf diese Weise vollkommen gelöst.

Mit der Erfindung wird ein mechanisch sicheres Halten der Gläser möglich. Die drei oder mehr Anlagepunkte ermöglichen dabei auch ein Zentrieren des Brillenglases im Greifer. Die Verwendung einer Ummantelung hat den Vorteil, dass eine Beschädigung des Umfanges der Gläser vermieden wird, auch wenn relativ hohe Greifkräfte aufgewendet werden.

Weiterhin ist bevorzugt, wenn die Gläser seitlich ergriffen werden bzw. die Finger in seitlicher Richtung an den Umfang anlegbar sind.

Diese Maßnahme hat die bereits erwähnten Vorteile, dass die empfindliche optische Oberfläche des Brillenglases beim Ergreifen der Gläser nicht angetastet wird.

Hierzu ist besonders bevorzugt, wenn die Finger im Wesentlichen parallel zueinander angeordnet sind.

Diese Maßnahme hat den Vorteil, dass je nach Positionierung der vier Finger sowohl eine Greif- wie auch eine Zentrierfunktion ausgeübt werden kann, und dass die Art der Finger optimiert werden kann, je nachdem, ob an ihrem Umfang kreisförmige, elliptische oder sonst wie allgemein geformte Gläser gehandhabt werden sollen.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:
- Fig. 1: ein Flussdiagramm zur Erläuterung eines Verfahrens zum Herstellen von optischen Gläsern nach dem Stand der Technik;
- Fig. 2: ein Flussdiagramm, ähnlich Fig. 1, jedoch für ein Ausführungsbeispiel eines erfindungsgemäßen Verfahrens;
- Fig. 3: eine äußerst schematisierte Draufsicht auf ein Ausführungsbeispiel einer erfindungsgemäßen Vorrichtung;
- Fig. 4: eine Seitenansicht, entlang der Linie IV-IV von Fig. 3;
- Fig. 5: in stark vergrößertem Maßstab eine Seitenansicht, teilweise im Schnitt, einer Hand eines Roboters, wie er in der Vorrichtung gemäß den Fig. 3 und 4 Verwendung findet;
- Fig. 6 bis 11: schematisierte Draufsichten, für fünf unterschiedliche Ausführungsbeispiele eines Greifers;

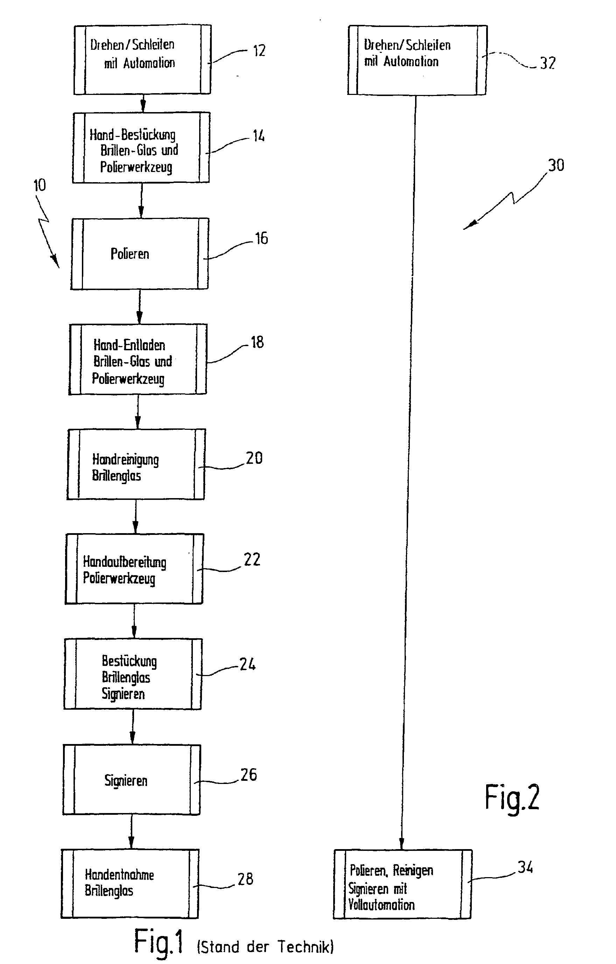

In Fig. 1 bezeichnet 10 ein Flussdiagramm zur Erläuterung eines Arbeitsverfahrens nach dem Stand der Technik. Nach dem Drehen bzw. Schleifen eines Brillenglases (Block 12) werden sowohl das Brillenglas wie auch ein Polierwerkzeug von Hand in einer Poliermaschine bestückt (Block 14). Die Poliermaschine führt dann den Poliervorgang aus (Block 16). Das polierte Brillenglas wird nun entladen und das Polierwerkzeug entnommen (Block 18).

Das Brillenglas muss nun entweder von Hand oder mit einer speziellen Waschvorrichtung gereinigt werden (Block 20), und das Polierwerkzeug und/oder das Waschwerkzeug muss von Hand oder mittels einer speziellen Vorrichtung aufbereitet werden (Block 22). Das Brillenglas wird nun einer Signierstation von Hand zugeführt (Block 24) und dort signiert (Block 26). Erst dann kann das Brillenglas von Hand entnommen (Block 28) und weiter transportiert werden.

Aus der vorstehenden Darstellung wird deutlich, dass die herkömmlichen Verfahren einen sehr hohen Zeitaufwand erfordern, weil eine Fülle manueller Vorgänge ablaufen muss, was einerseits Zeit kostet, andererseits aber auch eine Fehlerquelle ist.

Im Gegensatz dazu zeigt Fig. 2 ein Flussdiagramm 30, bei dem zunächst in herkömmlicher Weise die automatische Formbearbeitung des Brillenglases mittels Drehen oder Schleifen vorausgeht (Block 32), dann aber sämtliche nachfolgenden Schritte des Polierens, Reinigens und Signierens vollautomatisch ablaufen (Block 34), ohne dass ein manueller Eingriff erforderlich ist. Dies soll nachstehend beschrieben werden:

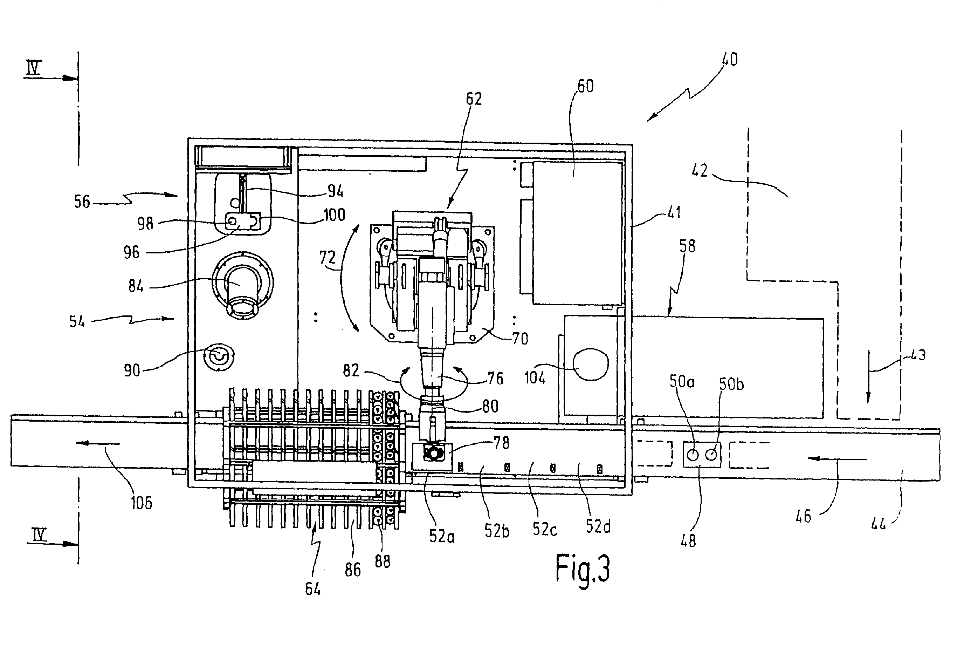

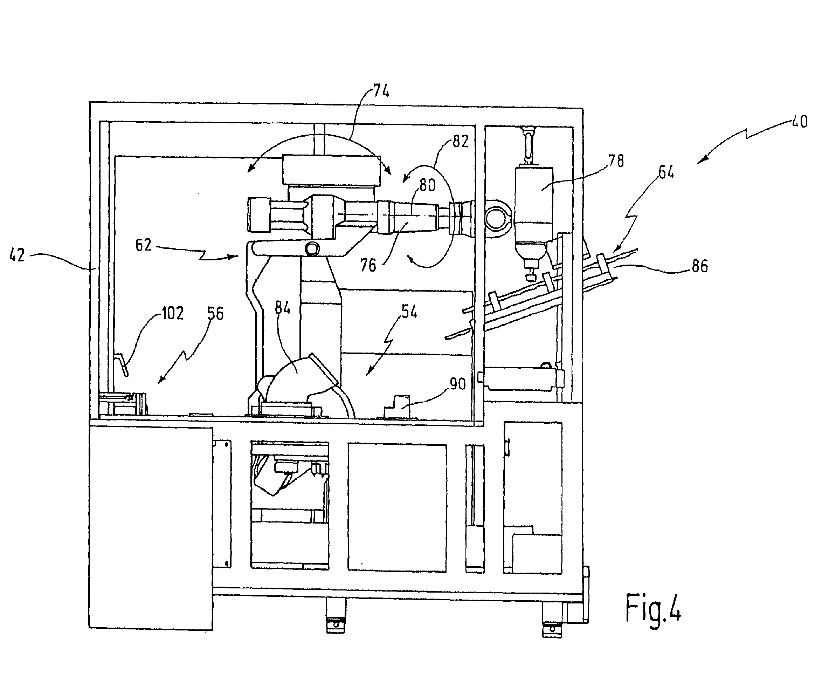

In Fig. 3 und 4 bezeichnet 40 eine Fertigungszelle mit einem Gehäuserahmen 41. In der Fertigungszelle 40 laufen die Vorgänge des Polierens, Waschens und Signierens vollautomatisch ab.

Von einer herkömmlichen Dreh- oder Schleifmaschine 42 werden die Gläser in Richtung eines Pfeils 43 einem Förderband 44 zugeführt, wo sie in einer mit einem Pfeil 46 angedeuteten Förderrichtung zur Fertigungszelle 40 transportiert werden.

Zum Transport werden Transportkisten 48 auf dem Förderband 44 verwendet. In jeder Transportkiste 48 befindet sich ein Paar Gläser 50a, 50b, die jeweils einem bestimmten Patienten bzw. Kunden zugeordnet sind. Wie weiter unten noch erläutert werden wird (Fig. 12), sind die Gläser 50 in an sich bekannter Weise auf einem Block 51 angeordnet, damit sie während der Bearbeitung leichter gehalten und bewegt (gedreht) werden können.

Auf dem Förderband 44 sind in der Fertigungszelle 40 im dargestellten Ausführungsbeispiel vier Handhabungspositionen 52a, 52b, 52c und 52d angedeutet. Auf diesen Positionen 52a bis 52d kann jeweils eine Transportkiste 48 angehalten werden. Dies ermöglicht es, die Gläser 50 in definierter Position bereit zu halten, damit auch Gläser 50 aus unterschiedlichen Transportkisten 48 parallel in den verschiedenen Stationen der Fertigungszelle 40 bearbeitet werden können.

Die Fertigungszelle 40 enthält eine Polierstation 54, eine Waschstation 56, eine Signierstation 58 sowie ein zentrales Steuergerät 60. Als zentrales Arbeitsmittel ist in der Fertigungszelle 40 ein Roboter 62 vorgesehen, der mit einem Werkzeugmagazin 64 zusammenarbeitet.

Der Roboter 60 steht auf einer Basis 70. Mit Pfeilen 72 und 74 sind einige Bewegungsmöglichkeiten des Roboters 62 angedeutet. Bei einem bevorzugten Ausführungsbeispiel der Erfindung ist der Roboter 62 ein Sechs-Arm-Roboter.

Der Roboter 62 weist einen Arm 76 auf, an dessen freiem Ende sich eine Hand 78 befindet. Die Hand 78 ist um eine entlang des Arms 76 verlaufende Achse 80 drehbar, wie mit einem weiteren Pfeil 82 angedeutet.

Die Fertigungszelle 40 arbeitet wie folgt:

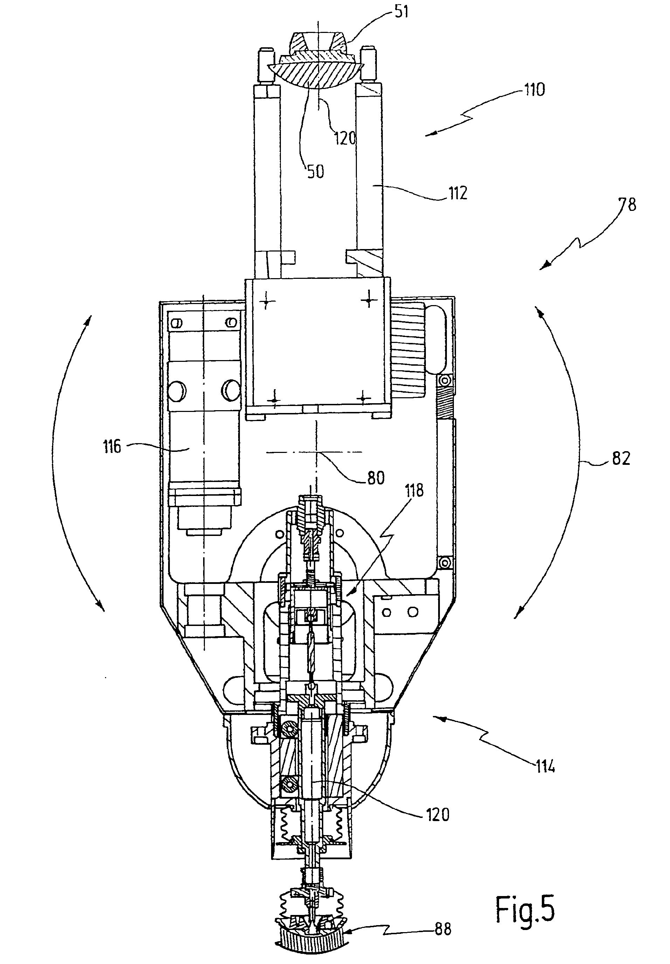

Zu Beginn eines Bearbeitungsvorganges wird der Roboter 62 so betätigt, dass ein an der Hand 78 befindlicher Greifer ein Glas 50 aus einer Transportkiste 48 übernimmt. Einzelheiten des Greifers werden weiter unten an Hand der Fig. 5 und 12 bis 17 noch erläutert werden.

Der Roboter 62 überführt das Glas 50 nun zu einer Polierspindel 84 in der Polierstation 54. In der Polierspindel 84 wird das Glas 50 mit seinem Block 51 in eine Aufnahme der Polierspindel 84 eingesetzt, so dass das Glas 50 gedreht werden kann.

Nach dem Absetzen des Glases 50 in der Polierspindel 84 fährt der Roboter 62 die Hand 78 zum Werkzeugmagazin 64. Dort sind in Schächten 86 Polierwerkzeuge 88 gelagert. Es können z.B. Polierwerkzeuge 88 unterschiedlicher Größe in den verschiedenen Schächten 86 sortiert sein. Weitere Einzelheiten zum Werkzeugmagazin 64 werden weiter unten an Hand der Fig. 18 bis 20 noch erläutert werden.

Da es sich bei Polierwerkzeugen 88 um Verschleißteile handelt, die nach einem Poliervorgang aufgearbeitet werden müssen, ist es erforderlich, im Werkzeugmagazin 64 eine genügend große Anzahl von Polierwerkzeugen 88 bereit zu halten, beispielsweise so viele Polierwerkzeuge, wie für eine Tagesproduktion erforderlich sind.

Zur Aufnahme des Polierwerkzeugs 88 wird die Hand 78 des Roboters 62 um die Achse 80 verdreht, damit das jeweilige Polierwerkzeug 88 aufgenommen werden kann. Einzelheiten dazu werden weiter unten an Hand der Fig. 5 bis 11 noch erläutert werden.

Der Roboter 62 kehrt nun mit dem an der Hand 78 befindlichen Polierwerkzeug 88 zur Polierstation 54 zurück und fährt dort in einen die Polierspindel 84 umgebenden Kragen ein, bis das Polierwerkzeug 88 mit seiner Polieroberfläche in Anlage an die zu polierende Oberfläche des Glases 50 gelangt. Einzelheiten des Poliervorganges werden weiter unten noch beschrieben werden, insbesondere in Verbindung mit Fig. 21.

Wenn der Poliervorgang beendet ist, fährt die Hand 78 mit dem Polierwerkzeug 88 aus der Polierspindel 84 heraus. Das Polierwerkzeug 88 wird nun zu einem Abwurfmagazin 90 verfahren. Hier wird das Polierwerkzeug 88 von der Hand 78 abgezogen, indem das Polierwerkzeug 88 gegen einen hintergreifenden Anschlag fährt und die Hand 78 dann vom Polierwerkzeug 88 weg gefahren wird. Das Polierwerkzeug 88 fällt dann in einen mit Reinigungsflüssigkeit befüllten Behälter des Abwurfmagazins 90.

Der Roboter 62 kehrt nun mit der Hand 78 zur Polierstation 54 zurück und übernimmt dort das polierte, jedoch in Folge des Poliervorganges verschmutzte Glas 50. Er überführt dieses nun zur Waschstation 56, und zwar zu einem dort befindlichen Halter 94.

Der Roboter 62 löst sich nun mit seiner Hand 78 vom Glas 50 und ergreift einen in einer Wanne 96 der Waschstation 56 befindlichen Schwamm 98, um anschließend das polierte Glas 50 zu reinigen. Zu diesem Zweck kann das Glas 50 im Halter 94 fest gehalten oder auch bewegt werden.

Nach Beendigung des Waschvorganges wird der Schwamm 98 in einer Absetzvorrichtung 100 wieder in der Wanne 96 abgesetzt. Dies kann wiederum durch einen hintergreifenden Anschlag und eine Abziehbewegung der Hand geschehen.

Zur Unterstützung des Waschvorganges ist eine Mehrzahl von Düsen vorgesehen, von denen eine in Fig. 4 bei 102 angedeutet ist. Über die Düsen 102 wird eine Waschflüssigkeit, beispielsweise Wasser, und anschließend ein Trocknungsmedium, beispielsweise Pressluft, zugeführt.

Nach dem Absetzen des Schwammes 98 fährt der Roboter 62 mit der Hand 78 wieder zu dem nunmehr gewaschenen und getrockneten Glas 50 und übernimmt dieses aus dem Halter 94. Der Roboter 62 überführt das Glas nun zu einem Signierhalter 104 in der Signierstation 58. Dort wird das Glas 50 beispielsweise mittels eines Lasers signiert, d.h. mit einer bestimmten Typennummer, aber auch mit Marken auf der optischen Fläche versehen, die es dem Optiker später gestatten, das Brillenglas exakt in ein Brillengestell einzupassen.

Während der Roboter 62 sowohl in der Polierstation wie auch in der Waschstation aktiv an den dortigen Arbeitsschritten des Polierens und Waschens teilnahm, ist eine derartige Aktivität in der Signierstation 58 nicht erforderlich, weil das Glas 50 dort lediglich auf dem Signierhalter 104 abgesetzt wurde und im Übrigen das Signieren automatisch und ohne Einbeziehung des Roboters 62 abläuft.

Da andererseits der Signiervorgang einige Zeit in Anspruch nimmt, kann in bevorzugter Weiterbildung der Erfindung der Roboter 62 während dieser Zeit bereits das nächste Glas 50 aus seiner Transportkiste 48 entnehmen und daran die zuvor beschriebenen Schritte des Polierens und Waschens ausführen. Es ist auch denkbar, dass auch bereits ein übernächstes Glas in dieser Weise gehandhabt und bearbeitet wird, bis das erste Glas fertig signiert ist und dann mittels des Roboters 62 wieder vom Signierhalter 104 abgenommen und in seine Transportkiste 48 zurück gelegt werden kann.

Die Transportkisten 48 mit den fertig bearbeiteten Gläsern 50 verlassen nun die Fertigungszelle 40 auf dem Förderband 44 in Richtung des in Fig. 3 eingezeichneten Pfeils 106.

Die Fig. 5 zeigt weitere Einzelheiten der an der Hand 78 befindlichen Elemente.

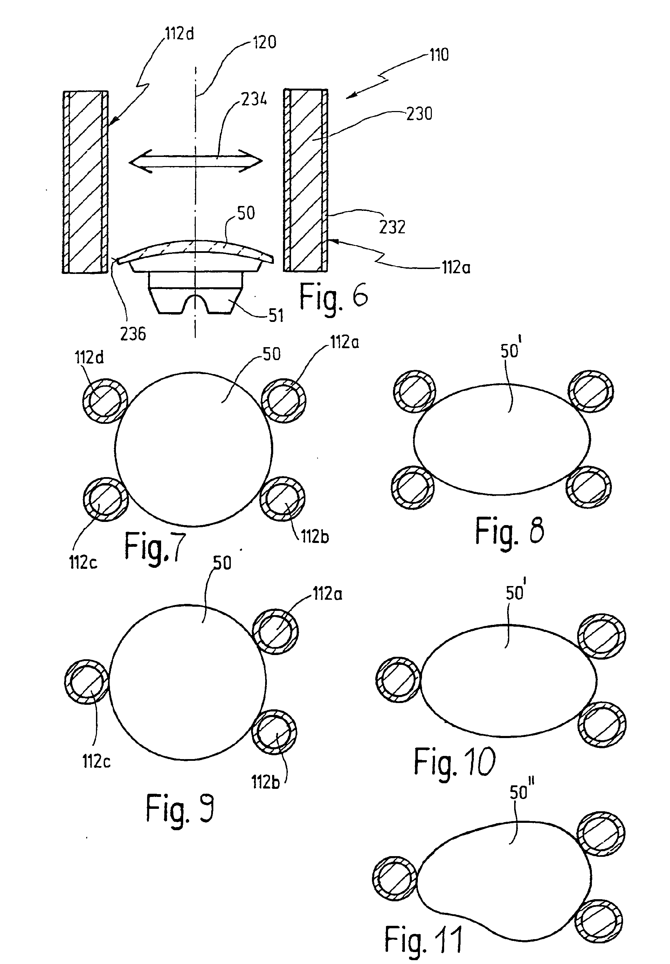

Fig. 5 zeigt in einer Seitenansicht die senkrecht zur Zeichenebene der Fig. 6 verlaufende Achse 80 des Armes 76 sowie die mit dem Pfeil 82 angedeutete Verschwenkbewegung der Hand 78 um jeweils vorzugsweise 180°. Es versteht sich an dieser Stelle, dass an der Hand 78 selbstverständlich auch eine größere Anzahl von Einheiten in entsprechend kleineren Winkelabständen vorgesehen sein kann.

In der Darstellung gemäß Fig. 5 befindet sich am oberen Ende der Hand 78 ein Greifer 110 mit mehreren Fingern 112. Am unteren Ende der Hand 78 befindet sich ein Polierkopf 114 mit einem Drehantrieb 116 für das Polierwerkzeug 88 sowie einer Kolben-Zylinder-Einheit 118 für eine axiale Auslenkung des Polierwerkzeugs 88 entlang einer Längsachse 120.

Auch hier versteht sich, dass die dargestellten Elemente nur äußerst schematisch zu verstehen sind und selbstverständlich auch andere Formen von Drehantrieben oder Linearantrieben eingesetzt werden können.

In den Fig. 6 bis 11 sind weitere Einzelheiten des Greifers 110 dargestellt.

Fig. 6 zeigt, dass die Finger 112 des Greifers 110 aus einem Kern 230 und einem Mantel 232 bestehen, wobei der Kern 230 mechanisch stabil und hart und der Mantel 232 vorzugsweise weich ausgebildet ist.

Wichtig beim Greifer 110 ist, dass die Finger 112 das Glas 50 ausschließlich an dessen Umfang 236 ergreifen, so dass die optische Oberfläche des Glases 50 nicht berührt wird. Sie werden von der Seite her an den Umfang 236 des Glases 50 herangefahren bzw. wieder von diesem weggefahren, wie mit einem Doppelpfeil 234 angedeutet.

Die Finger 112 sind im Wesentlichen parallel zueinander angeordnet. Je nach Positionierung der Finger 112 kann sowohl eine Greif- wie auch eine Zentrierfunktion ausgeübt werden. Die Art der Finger 112 kann optimiert werden, je nachdem, ob kreisförmige, elliptische oder sonst wie allgemein geformte Gläser an ihrem Umfang gehandhabt werden sollen.

Fig. 7 zeigt eine Konfiguration, bei der ein in der Draufsicht kreisförmiges Glas 50 mit vier Fingern 112a bis 112d gehalten wird, was gemäß der Darstellung in Fig. 8 auch bei einem Glas 50' mit in der Draufsicht elliptischer Form möglich ist.

Wie die Fig. 9 und 10 zeigen, gelingt dies im Wesentlichen auch beim Einsatz von drei Fingern 112a bis 112c.

Fig. 11 zeigt schließlich ein in der Draufsicht unregelmäßig geformtes Glas 50', das ebenfalls mit drei Fingern gehalten werden kann.

In allen gezeigten Fällen erstrecken sich die Finger 112 beim Ergreifen der Gläser 50 im wesentlichen senkrecht zu deren Oberfläche.

## Patentansprüche

1. Verfahren zum Herstellen von Brillengläsern (50), bei dem ein Roboter (62) die Brillengläser (50) mittels eines Greifers (110) hält, der die Brillengläser (50) ausschließlich an deren Umfang (236) ergreift, **dadurch gekennzeichnet, dass** die Brillengläser (50) nach dem Polieren einer Oberfläche der Brillengläser (50) mit Fingern des Roboters (62) an drei oder mehr Punkten ihres Umfanges (236) mit einer geregelten Kraft ergriffen werden, wobei die Finger (112) an ihrem Umfang mit einer weichen Ummantelung (232) versehen sind und beim Ergreifen der Brillengläser (50) im Wesentlichen senkrecht zur Oberfläche gerichtet werden.

2. Verfahren nach Anspruch 1, **dadurch gekennzeichnet, dass** die Brillengläser (50) an vier Punkten ihres Umfanges (236) ergriffen werden.

3. Verfahren nach Anspruch 2, **dadurch gekennzeichnet, dass** die Brillengläser (50) mit einer seitlichen Bewegung (234) ergriffen werden.

4. Vorrichtung zum Herstellen von Brillengläsern (50), mit einem Roboter (62), der die Brillengläser (50) an deren Umfang (236) ergreift, **dadurch gekennzeichnet, dass** der Roboter (62) einen Greifer (110) mit drei oder mehr Fingern (112) aufweist, die nach dem Polieren einer Oberfläche der Brillengläser (50) senkrecht zu der Oberfläche gerichtet an den Umfang (236) anlegbar sind, wobei der Greifer (110) die Brillengläser (50) mit einer vorgegebenen Kraft ergreift, wobei ein Regler für die Kraft vorgesehen ist, und wobei die Finger (112) an ihrem Umfang mit einer weichen Ummantelung (232) versehen sind.

5. Vorrichtung nach Anspruch 4, **dadurch gekennzeichnet, dass** der Roboter (62) vier Finger (112) aufweist.

6. Vorrichtung nach Anspruch 4 oder 5, **dadurch gekennzeichnet, dass** die Finger (112) in seitlicher Richtung (234) an den Umfang (236) anlegbar sind.

7. Vorrichtung nach einem der Ansprüche 4 bis 6, **dadurch gekennzeichnet, dass** die Finger (112) im Wesentlichen parallel zueinander angeordnet sind.

## Claims

1. A method for producing optical glasses (50), in which a robot (62) holds the optical glasses (50) by means of a gripper (110) which grips the optical glasses (50) exclusively at their periphery (236), **characterized in that** the optical glasses (50), after polishing of the surface of the optical glasses (50), are gripped by fingers of the robot (62) at three or more points of their periphery (236) with a controlled force, wherein the fingers (112) are provided with a soft envelope (232) at their periphery and are directed substantially perpendicular to the surface when gripping the optical glasses (50).

2. The method of claim 1, **characterized in that** the optical glasses (50) are gripped at four points of their periphery (236).

3. The method of claim 2, **characterized in that** the optical glasses (50) are gripped with a lateral movement (234).

4. An apparatus for producing optical glasses (50), comprising a robot (62) which grips the optical glasses (50) at their periphery (236), **characterized in that** the robot (32) has a gripper (110) with three or more fingers (112) which, after polishing the surface of the optical glasses (50), can be applied to the periphery (236) in a manner directed perpendicularly to the surface, wherein the gripper (110) grips the optical glasses (50) with a predetermined force, wherein a control of the force is provided, and wherein the fingers (112) are provided with a soft envelope (232) at their periphery.

5. The apparatus of claim 4, **characterized in that** the robot (62) has four fingers (112).

6. The apparatus of claim 4 or 5, **characterized in that** the fingers (112) can be applied to the periphery (236) in lateral direction (234).

7. The apparatus of any one of claims 4 through 6, **characterized in that** the fingers (112) are arranged substantially parallel with respect to one another.

## Revendications

1. Procédé de production de verres de lunettes (50), pour lequel un robot (62) maintient les verres de lunettes (50) à l'aide d'une pince (110) qui saisit les verres de lunettes (50) exclusivement sur leur périphérie (236), **caractérisé en ce que** les verres de lunettes (50) sont saisis après le polissage d'une surface des verres de lunettes (50) avec des doigts du robot (62) sur trois points ou plus de leur périphérie (236) avec une force réglée, les doigts (112) étant pourvus sur leur périphérie d'une enveloppe molle (232) et lors de la saisie des verres de lunettes (50) étant dirigés essentiellement perpendiculairement à la surface.

2. Procédé selon la revendication 1, **caractérisé en ce que** les verres de lunettes (50) sont saisis sur quatre points de leur périphérie (236).

3. Procédé selon la revendication 2, **caractérisé en ce que** les verres de lunettes (50) sont saisis par un mouvement latéral (234).

4. Dispositif de production de verres de lunettes (50), avec un robot (62) qui saisit les verres de lunettes (50) sur leur périphérie (236), **caractérisé en ce que** le robot (62) présente une pince (110) avec trois doigts ou plus (112) qui peuvent être posés après le polissage d'une surface des verres de lunettes (50), orientés perpendiculairement à la surface sur la périphérie (236), la pince (110) saisissant les verres de lunettes (50) avec une force prescrite, un régulateur pour la force étant prévu et les doigts (112) étant pourvus sur leur périphérie d'une enveloppe molle (232).

5. Dispositif selon la revendication 4, **caractérisé en ce que** le robot (62) présente quatre doigts (112).

6. Dispositif selon la revendication 4 ou 5, **caractérisé en ce que** les doigts (112) peuvent être posés dans le sens latéral (234) sur la périphérie (236).

7. Dispositif selon l'une quelconque des revendications 4 à 6, **caractérisé en ce que** les doigts (112) sont disposés essentiellement parallèlement les uns aux autres.
